# EUROPÄISCHE PATENTSCHRIFT

(11) **EP 2 628 982 B1**
(45) Veröffentlichungstag und Bekanntmachung des Hinweises auf die Patenterteilung: **31.12.2014**
(21) Anmeldenummer: 12000960.0
(22) Anmeldetag: 14.02.2012
(51) Int. Cl.: F16J 15/32

(54) **Dichtungsanordnung und deren Verwendung**
Seal assembly and its application
Agencement d'étanchéité et son utilisation

(43) Veröffentlichungstag der Anmeldung: 21.08.2013
(73) Patentinhaber: Carl Freudenberg KG, 69469 Weinheim (DE)
(72) Erfinder: Dahlhaus-Preussler, Ulrich, 68535 Edingen-Neckarhausen (DE)

(56) Entgegenhaltungen:
- EP-A1- 0 919 749
- EP-A1- 1 783 405
- DE-A1- 4 123 392

## Beschreibung

### Technisches Gebiet

Die Erfindung betrifft eine Dichtungsanordnung und deren Verwendung.

Die Dichtungsanordnung umfasst einen Radialwellendichtring mit zumindest einer ersten und einer zweiten dynamisch beanspruchten Dichtlippe, die einander mit axialem Abstand benachbart zugeordnet sind und zusammen mit einem abzudichtenden ersten Maschinenelement, das sie außenumfangsseitig dichtend umschließen, ein mit einem Schmiermittel zumindest teilweise gefülltes Schmiermittelreservoir begrenzen.

### Stand der Technik

Eine solche Dichtungsanordnung ist aus der WO 20091103314 A1 bekannt. Die vorbekannte Dichtungsanordnung gelangt zur Abdichtung von Wasch- oder Spülmaschinen zur Anwendung, wobei die beiden dynamisch beanspruchten Dichtlippen zwei Räume gegeneinander abdichten. Die erste Dichtlippe ist dabei axial in Richtung des ersten abzudichtenden Raums vorgewölbt, die zweite Dichtlippe axial in Richtung des zweiten abzudichtenden Raums, wobei beide Dichtlippen jeweils Dichtrippen aufweisen, die einen Förderdrall des abzudichtenden Mediums bewirken. Die Dichtrippen sind derart angeordnet, dass sich für beide Dichtlippen die gleiche Förderrichtung ergibt.

Gelangt die vorbekannte Dichtungsanordnung zur Abdichtung einer Wasch-oder Spülmaschine zur Anwendung, werden eine Waschlauge und das Schmierfett eines Wälzlagers gegeneinander abgedichtet; die Föderrichtung ist dann in Richtung Waschlauge.

Im Schmiermittelreservoir befindet sich ein Schmierfett mit einem guten Barriereverhalten, um die beiden abzudichtenden Medien während der Gebrauchsdauer der Dichtungsanordnung sicher voneinander zu trennen.

Aus der vorbekannten Patentanmeldung ist die Problematik bekannt, wonach die Verwendung eines Schmierfetts mit einem guten Barriereverhalten im Schmiermittelreservoir üblicherweise einen hohen Verschleiß der Dichtlippen zur Folge hat, weil Schmierfette mit einem guten Barriereverhalten funktionsbedingt nur eine geringe Ölabscheiderate aufweisen.

Gelangen demgegenüber Schmierfette mit einer guten Ölabscheiderate innerhalb des Schmiermittereservoirs zur Anwendung, werden zwar die Dichtlippen ausreichend gut geschmiert, jedoch weisen solche Schmierfette ein schlechtes Barriereverhalten auf, werden deshalb von der Waschlauge vergleichsweise rasch ausgewaschen und können aus diesem Grund die Dichtlippen nicht mehr ausreichend schmieren.

Generell, aber auch bei der vorbekannten Dichtungsanordnung, ist die Montage des Radialwellendichtrings in die Dichtungsanordnung problematisch. Das Schmiermittel innerhalb des Schmiermittelreservoirs wird teilweise montagebedingt an zumindest einer der dynamisch beanspruchten Dichtlippen vorbei in den entsprechenden abzudichtenden Raum herausgedrückt. Gelangt die Dichtungsanordnung bei Wasch-oder Spülmaschinen zur Anwendung, befindet sich das aus dem Schmiermittelreservoir herausgedrückte Schmiermittel in einnem relativ großen Totraum zwischen der Dichtlippe, die vom Schmiermittel passiert wurde, und einem zweiten Maschinenelement, zum Beispiel einem Wälzlager. Durch Rotation des abzudichtenden ersten Maschinenelements wird das aus dem Schmiermittelreservoir herausgedrückte Schmiermittel durch die Fliehkraft von der Dichtlippe weg radial nach außen geschleudert, so dass es für die Dichtlippe keine Funktion mehr hat; insbesondere steht es nicht mehr zur Schmierung der Dichtlippe zur Verfügung, Dadurch wird der Verschleiß erhöht und die Lebensdauer der Dichtungsanordnung reduziert.

Aus der DE 41 23 392 A1, die den nächstliegenden Stand der Technik repräsentiert, ist eine Dichtungsanordnung bekannt, umfassend einen Radialwellendichtring mit einer ersten und einer zweiten dynamisch beanspruchten Dichtlippe , die einander mit axialem Abstand benachbart zugeordnet sind, wobei zwischen den beiden Dichtlippen eine mittlere Lippe angeordnet ist. Die mittlere Lippe ist als Schutzlippe ausgebildet, wobei in axialer Richtung zwischen der mittleren Lippe und der äußeren Dichtlippe ein mit einem Schmiermittel gefülltes Schmiermittelreservoir angeordnet ist, das außerdem durch das abzudichtende erste Maschinenelement begrenzt ist. Die mittlere Lippe dient im Wesentlichen zur Begrenzung des Schmiermittelreservoirs; eine gezielte Dichtwirkung dieser Schutzlippe ist nicht vorgesehen. Die Schutzlippe kann die Oberfläche des ersten Maschinenelements deshalb mit geringem radialem Abstand umschließen.

Die axial äußere Dichtlippe weist vorzugsweise eine Doppelkante auf, wobei die eigentliche Dichtkante axial innen liegend, die axial äußere Dichtkante als Schutzkante oder Schutzlippe ausgebildet ist. Die Schutzkante oder Schutzlippe dient primär dazu, die axial äußere Dichtlippe vor evtl. eindringenden körnigen Staubpartikeln und dergleichen, die möglicherweise die empfindliche Dichtkante beschädigen könnten, zu schützen.

Eine ähnliche Dichtungsanordnung ist aus der EP 1 783 405 A1 bekannt.

Aus der EP 0 919 749 A1 ist eine weitere Dichtungsanordnung bekannt, die ein mit einem Schmiermittel gefülltes Schmiermittelreservoir aufweist.

Zusammen mit einer Kehle im abzudichtenden ersten Maschinenelement pendelt sich der Schmiermittelvorrat im Schmiermittelreservoir auf einer Höhe ein, die höher ist als die der Dichtungslippe, wodurch die Dichtungslippe dauerhaft geschmiert werden soll.

Bei dem vorbekannten Radialwellendichtring gelangt nur eine dynamisch beanspruchte Dichtungslippe zur Anwendung.

### Darstellung der Erfindung

Der Erfindung liegt die Aufgabe zugrunde, eine Dichtungsanordnung der vorbekannten Art derart weiter zu entwickeln, dass das montagebedingt aus dem Schmiermittelreservoir herausgedrückte Schmiermittel trotzdem zur Schmierung der Dichtlippe beiträgt, um den Verschleiß am Radialwellendichtring zu reduzieren und die Lebensdauer der Dichtungsanordnung zu erhöhen.

Diese Aufgabe wird erfindungsgemäß durch eine Dichtungsanordnung mit den Merkmalen von Patentanspruch 1 gelöst. Auf vorteilhafte Ausgestaltungen nehmen die Unteransprüche Bezug.

Zur Lösung der Aufgabe ist es vorgesehen, dass zumindest der ersten Dichtlippe ein zusätzliches Dichtelement zugeordnet ist, mit einer nutförmig ausgebildeten, radial nach innen offenen Schmiermittelkammer, die die erste Dichtlippe außenumfangsseitig mit radialem Abstand schirmartig überspannt. Die erste Dichtlippe ist dabei diejenige, an der während der Montage der Dichtungsanordnung Schmiermittel aus dem Schmiermittelreservoir vorbei in die Umgebung gelangt.

Durch das zusätzliche Dichtelement mit seiner Schmiermittelkammer wird verhindert, dass das aus dem Schmiermittelreservoir herausgedrückte Schmiermittel während der bestimmungsgemäßen Verwendung der Dichtungsanordnung, also bei Rotation des abzudichtenden ersten Maschinenelements, radial nach außen geschleudert wird und dadurch zur Schmierung der ersten Dichtlippe nicht mehr zur Verfügung stehen kann. Die nutförmig ausgebildete und radial nach innen offene Schmiermittelkammer überspannt den Bereich um die erste Dichtlippe schirmartig, um abgeschleudertes Schmiermittel auffangen zu können. Nachdem das Schmiermittel durch die Schmiermittelkammer aufgefangen wurde, kann es radial nach innen in Richtung der ersten Dichtlippe wieder abtropfen und dadurch die erste Dichtlippe schmieren. Trotz aus dem Schmiermittelreservoir herausgedrücktem Schmiermittel tritt keine Mangelschmierung der ersten Dichtlippe auf. Verschleiß wird auf ein Minimum reduziert und die Lebensdauer der gesamten Dichtungsanordnung dadurch erhöht

Die Schmiermittelkammer kann aus einem gummielastischen Werkstoff bestehen.

Das während der Montage und der anschließenden bestimmungsgemäßen Verwendung des Radialwellendichtrings aus dem Schmiermittelreservoir ausgetretene Schmiermittel ist zumindest teilweise in der Schmiermittelkammer aufgenommen und wird anschließend zur Schmierung der ersten Dichtlippe aus der Schmiermittelkammer wieder selbsttätig abgegeben.

Aus der guten Schmierung der ersten Dichtlippe auch dann, wenn montagebedingt Schmiermittel aus dem Schmiermittelreservoir herausgedrückt wurde, resultieren eine dauerhaft geringe Reibung und eine zuverlässige Lebensdauerschmierung.

Das Schmiermittel kann durch ein Schmierfett gebildet sein. Dadurch, dass die erste Dichtlippe durch das zusätzliche Dichtelement mit seiner Schmiermittelkammer stets gut geschmiert ist und eine Mangelschmierung deshalb nicht auftritt, kann ein Schmierfett mit einem guten Barriereverhalten zur Anwendung gelangen.

Die erste Dichtlippe kann mit axialem Abstand benachbart zu einem zweiten Maschinenelement angeordnet sein. Eine solche Anordnung liegt z. B. dann vor, wenn die Dichtungsanordnung in Wasch- oder Spülmaschinen Verwendung findet. Das zweite Maschinenelement kann in einem solchen Fall durch ein Wälzlager, insbesondere durch den Innenring eines Wälzlagers gebildet sein.

Gemäß einer vorteilhaften Ausgestaltung kann es vorgesehen sein, dass das zusätzliche Dichtelement eine zusätzliche Dichtlippe aufweist, die in axialer Richtung zwischen der ersten Dichtlippe und dem zweiten Maschinenelement angeordnet ist und das zweite Maschinenelement dichtend berührt. Durch die zusätzliche Dichtlippe wird verhindert, dass abgeschleudertes Schmiermittel auf der dem zweiten Maschinenelement axial zugewandten Seite an der Schmier mittelkammer vorbei gelangt und dadurch zur Schmierung der ersten Dichtlippe nicht mehr zur Verfügung steht.

Die zusätzliche Dichtlippe ist bevorzugt radial in Richtung der Schmiermittelkammer trichterförmig verengt und begünstigt dadurch ein Sammeln des abgeschleuderten Schmiermittels in der Schmiermittelkammer.

Das erste Maschinenelement kann durch eine abzudichtende Welle oder einen Laufring gebildet sein, der die Welle drehfest und dichtend umschließt. Gelangt ein Laufring zur Anwendung, ist der Radialwellendichtring in Form einer Kassettendichtung ausgebildet. Die Verwendung eines Laufrings hat den Vorteil, dass die Oberfläche der Welle nicht die Lauffläche für die Dichtlippen des Radialwellendichtrings bildet und deshalb auch nicht entsprechend aufwendig bearbeitet zu werden braucht.

Gelangt demgegenüber kein Laufring zur Anwendung und die Dichtlippe umschließt die Oberfläche der abzudichtenden Welle unmittelbar anliegend, weist die Dichtungsanordnung einen teilarmen Aufbau auf.

Das zweite Maschinenelement kann durch den Innenring eines Wälzlagers gebildet sein. Die zusätzliche Dichtlippe ist ebenso, wie die beiden Dichtlippen des Radialwellendichtrings, dynamisch beansprucht, weil sie den Innenring des Wälzlagers dichtend und relativ verdrehbar berührt.

Die erste und/oder die zweite Dichtlippe und/oder die zusätzliche Dichtlippe können jeweils aus einem gummielastischen Werkstoff bestehen. Gummielastische Werkstoffe für Dichtlippen sind allgemein bekannt und für viele Anwendungen verfügbar. Durch die geeignete Auswahl des gummielastischen Werkstoffs für die Dichtlippen kann die Dichtungsanordnung an den jeweiligen Anwendungsfall, insbesondere an die jeweils abzudichtenden Medien, gut angepasst werden.

Die zusätzliche Dichtlippe und die Schmiermittelkammer sind bevorzugt einstückig und materialeinheitlich ausgebildet Die Herstellung ist dadurch besonders einfach und kostengünstig.

Die erste und die zweite Dichtlippe können einstückig ineinander übergehend und materialeinheitlich ausgebildet sein. Dadurch wird die Herstellbarkeit des Radialwellendichtrings vereinfacht, was zu einer kostengünstigen Herstellbarkeit der Dichtungsanordnung beiträgt.

Der Radialwellendichtring und/oder das zusätzliche Dichtelement können jeweils einen Stützkörper aus einem zähharten Werkstoff aufweisen. Die Stützkörper können z. B. aus einem metallischen Werkstoff bestehen. Die Stützkörper sorgen jeweils für eine ausreichende Formstabilität des Radialwellendichtrings und des zusätzlichen Dichtelements. Diese Formstabilität begünstigt eine gute und dauerhaltbare Positionierung der Dichtungsanordnung an den abzudichtenden Maschinenelementen.

Die Stützkörper können jeweils L-förmig ausgebildet sein und jeweils einen Axialvorsprung und jeweils einen Radialvorsprung aufweisen. Mittels der Axialvorsprünge werden der Radialwellendichtring und das zusätzliche Dichtelement in ihren jeweiligen Einbauraum eingepresst und dadurch in ihrer Position gehalten. Die Radialvorsprünge weisen radial innenseitig jeweils ein freies Ende auf, an dem im Fall des Radialwellendichtrings die beiden Dichtlippen und im Fall des zusätzlichen Dichtelements die Schmiermitteikammer und ggf. die zusätzliche Dichtlippe angeordnet sind.

Die Schmiermittelkammer und die zusätzliche Dichtlippe, die bevorzugt beide aus demselben gummielastischen Werkstoff bestehen, werden in einem gemeinsamen Verfahrensschritt an den Stützkörper angeformt.

Der Axialvorsprung des zusätzlichen Dichtelements kann vom Axialvorsprung des Radialwellendichtrings aussenumfangsseitig dichtend umschlossen sein, wobei das axial freie Ende des Axialvorsprungs des zusätzlichen Dichtelements den Radialvorsprung des Radialwellendichtrings anliegend berührt. Durch eine solche Ausgestaltung wird von den Stützringen gemeinsam ein Hohlraum begrenzt in dem die erste Dichtlippe, die Schmiermittelkammer und ggf. die zusätzliche Dichtlippe angeordnet sind. Dieser Hohlraum ist außerdem durch die erste Dichtlippe und die zusätzliche Dichtlippe vor äußeren Einflüssen geschützt; Verunreinigungen z. B. aus Richtung des zweiten Maschinenelements, vermögen dadurch nicht in den Hohlraum einzudringen.

Der Axialvorsprung des Radialwellendichtrings kann radial außenumfangsseitig von einer statischen Dichtung aus gummielastischem Werkstoff umschlossen sein. Während seiner bestimmungsgemäßen Verwendung ist der Radialwellendichting z. B. in eine Gehäusebohrung eingepresst, die von der abzudichtenden Welle durchdrungen ist. Die statische Dichtung dichtet die Gehäusebohrung statisch ab.

Gemäß einer vorteilhaften Ausgestaltung kann es vorgesehen sein, dass die beiden Dichtlippen des Radialwellendichtrings und dessen statische Dichtung aus einem übereinstimmenden Dichtungswerkstoff bestehen. Ein solcher Radialwellendichtring ist fertigungstechnisch und wirtschaftlich einfach und kostengünstig herstellbar. Davon abweichend besteht auch die Möglichkeit, jede der Dichtlippen und die statische Dichtung jeweils aus voneinander abweichenden Dichtungswerkstoffen herzustellen, wobei die jeweiligen Dichtungswerkstoffe hinsichtlich ihrer Gebrauchseigenschaften an den jeweiligen Anwendungsfall angepasst sind.

Der Axialvorsprung des Radialwellendichtrings kann vom gummielastischen Werkstoff der statischen Dichtung vollständig ummantelt sein. Hierbei ist von Vorteil, dass der Axialvorsprung vor unerwünschten äußeren Einflüssen geschützt ist, z. B. vor Korrosion, ohne dass es eines separat aufzubringenden Korrosionsschutzes bedarf.

Außerdem betrifft die Erfindung die Verwendung der zuvor beschriebenen Dichtungsanordnung. Verwendung findet die zuvor beschriebene Dichtungsanordnung in einer Wasch- oder Spülmaschine. Für eine solche Verwendung ist die beanspruchte Dichtungsanordnung besonders gut geeignet, weil in den genannten Fällen Medien mit stark unterschiedlicher Viskosität gegeneinander abzudichten sind. Eines der Medien ist eine Waschlauge, die zumeist fettlösende Eigenschaften hat, das andere abzudichtende Medium kann durch das Lagerschmierfett des zweiten Maschinenelements gebildet sein.

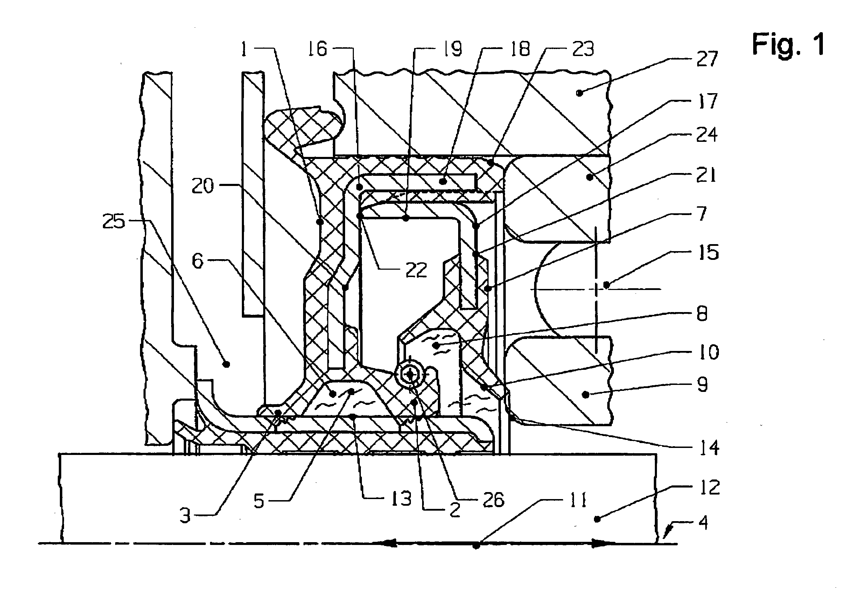

### Kurzbeschreibung der Zeichnung

Ein Ausführungsbeispiel der erfindungsgemäßen Dichtungsanordnung wird nachfolgend anhand der schematisch dargestellten Figur näher erläutert.

### Ausführung der Erfindung

In der Figur ist ein Ausführungsbeispiel der erfindungsgemäßen Dichtungsanordnung gezeigt. Die Dichtungsanordnung umfasst den Radialwellendichtring 1, der im Wesentlichen die beiden an dem Stützkörper 16 festgelegten, jeweils dynamisch beanspruchten Dichtlippen 2, 3 umfasst und die statische Dichtung 23, die den Axialvorsprung 18 des Radialwellendichtrings 1 radial außenumfangsseitig umschließt. Im hier dargestellten Ausführungsbeispiel sind die beiden Dichtlippen 2, 3 und die statische Dichtung 23 einstückig ineinander übergehend und materialeinheitlich ausgebildet. Sie bestehen aus einem gummielastischen Werkstoff. Die beiden Dichtlippen 2, 3 sind mit axialem Abstand zueinander benachbart angeordnet und begrenzen mit dem Laufring 13, der die Welle 12 drehfest und dichtend umschließt, das Schmiermittelreservoir 6, das mit Schmiermittel 5 gefüllt ist. Das Schmiermittel 5 ist durch ein Schmierfett gebildet, um das Eindringen von Waschlauge aus dem abzudichtenden Raum 25 an der zweiten Dichtlippe 3 vorbei axial in Richtung der ersten Dichtlippe 2 und des zweiten Maschinenelements 9 zu verhindern.

Außerdem umfasst die Dichtungsanordnung das zusätzliche Dichtelement 7. Das zusätzliche Dichtelement 7 umfasst den Stützkörper 17, wobei am freien Ende des Radialvorsprungs 21 des Stützkörpers 17 die nutförmig ausgebildete und radial nach innen offene Schmiermittelkammer 8 angeordnet ist. Die Schmiermittelkammer 8 ist einstückig ineinander übergehend und materialeinheitlich mit der zusätzlichen Dichtlippe 10 ausgebildet und besteht aus einem gummielastischen Werkstoff. Die Schmiermittelkammer 8 überspannt die erste Dichtlippe 2 außenumfangsseitig mit radialem Abstand schirmförmig, wobei die zusätzliche Dichtlippe 10 die der ersten Dichtlippe 2 axial zugewandte Stirnseite des Innenrings 14 des Wälzlagers 15 anliegend und dichtend berührt.

Das während der Montage oder der anschließenden bestimmungsgemäßen Verwendung des Radialwellendichtrings 1 aus dem Schmiermittelreservoir 6 an der ersten Dichtlippe 2 vorbei ausgetretene Schmiermittel 5 wird während des Betriebs der Dichtungsanordnung von der Schmiermittelkammer 8 aufgefangen. Schmiermittel 5, das z. B. während der Montage der Dichtungsanordnung an der ersten Dichtlippe 2 vorbei in Richtung des zweiten Maschinenelements 9 ausgetreten ist, wird durch die Rotation der Welle 12 und des mit der Welle 12 verbundenen Laufrings 13 radial nach außen in Richtung der Schmiermittelkammer 8 geschleudert und in dieser aufgenommen. Der Radialwellendichtring 1 und das zusätzliche Dichtelement 7 sind relativ unverdrehbar und ortsfest zueinander angeordnet. Das in der Schmiermittelkammer 8 aufgenommene Schmiermittel tropft über der ersten Dichtlippe 2 radial nach innen ab und schmiert dadurch zusätzlich den Kontaktbereich zwischen der ersten Dichtlippe 2 und der abzudichtenden Oberfläche des Laufrings 13.

Die statische Dichtung 23, von deren gummielastischem Werkstoff der Axialvorsprung des Radialwellendichtrings vollständig ummantelt ist, umschließt auch das axial freie Ende des Axialvorsprungs 18. Die statische Dichtung 23 berührt die der Dichtungsanordnung axial zugewandte Stirnseite des Außenrings 24 des Wälzlagers 15 unter axialer elastischer Vorspannung dichtend.

Die beiden Dichtlippen 2, 3 können jeweils einen Rückförderdrall aufweisen, wobei die Rückförderrichtung beider Dichtlippen 2, 3 gleich ist, nämlich axial in Richtung des abzudichtenden Raums 25, in dem sich die Waschlauge befindet.

Die erste Dichtlippe 2 ist in dem hier gezeigten Ausführungsbeispiel durch eine Ringwendelfeder 26 außenumfangsseitig umschlossen und federkraftbeaufschlagt, so dass auch bei relativ stillstehender Welle 12 und stillstehendem Laufring 13 ein gutes statisches Abdichtungsergebnis der ersten Dichtlippe 2 auf dem Laufring 13 erzielt wird.

Das Gehäuse, in dem das Wälzlager 15 angeordnet ist und das den Radialwellendichtring 1 und das zusätzliche Dichtelement 7 außenumfangsseitig umschließt, ist mit Bezugsziffer 27 versehen.

### Bezugszeichenliste:

- 1: Radialwellendichtring
- 2: erste dynamisch beanspruchte Dichtlippe
- 3: zweite dynamisch beanspruchte Dichtlippe
- 4: erstes Maschinenelement
- 5: Schmiermittel
- 6: Schmiermitteireservoir
- 7: zusätzliches Dichtelement
- 8: Schmiermittelkammer
- 9: zweites Maschinenelement
- 10: zusätzliche Dichtlippe
- 11: axiale Richtung
- 12: abzudichtende Welle
- 13: Laufring
- 14: Innenring von 15
- 15: Wälzlager
- 16: Stützkörper von 1
- 17: Stützkörper von 7
- 18: Axialvorsprung von 16
- 19: Axialvorsprung von 17
- 20: Radialvorsprung von 16
- 21: Radialvorsprung von 17
- 22: axial freies Ende von 19
- 23: statische Dichtung
- 24: Außenring von 15
- 25: abzudichtender Raum (Waschlauge)
- 26: Ringwendelfeder
- 27: Gehäuse

## Patentansprüche

1. Dichtungsanordnung, umfassend einen Radialwellendichtring (1) mit zumindest einer ersten (2) und einer zweiten dynamisch beanspruchten Dichtlippe (3), die einander mit axialem Abstand benachbart zugeordnet sind und zusammen mit einem abzudichtenden ersten Maschinenelement (4), das sie aussenumfangsseitig dichtend umschließen, ein mit einem Schmiermittel (5) zumindest teilweise gefülltes Schmiermittelreservoir (6) begrenzen, **dadurch gekennzeichnet, dass** zumindest der ersten Dichtlippe (2) ein zusätzliches Dichtelement (7) zugeordnet ist, mit einer nutförmig ausgebildeten, radial nach innen offenen Schmiermittelkammer (8), die die erste Dichtlippe (2) aussenumfangsseitig mit radialem Abstand schirmartig überspannt.

2. Dichtungsanordnung nach Anspruch 1, **dadurch gekennzeichnet, dass** das während der Montage und der anschließenden bestimmungsgemäßen Verwendung des Radialwellendichtrings (1) aus dem Schmiermittelreservoir (6) ausgetretene Schmiermittel (5) zumindest teilweise in der Schmiermittelkammer (8) aufgenommen ist

3. Dichtungsanordnung nach einem der Ansprüche 1 oder 2, **dadurch gekennzeichnet, dass** das Schmiermittel (5) durch ein Schmierfett gebildet ist.

4. Dichtungsanordnung nach Anspruch 1, **dadurch gekennzeichnet, dass** die erste Dichtlippe (2) mit axialem Abstand benachbart zu einem zweiten Maschinenelement (9) angeordnet ist.

5. Dichtungsanordnung nach Anspruch 4, **dadurch gekennzeichnet, dass** das zusätzliche Dichtelement (7) eine zusätzliche Dichtlippe (10) aufweist, die in axialer Richtung (11) zwischen der ersten Dichtlippe (2) und dem zweiten Maschinenelement (9) angeordnet ist und das zweite Maschinenelement (9) dichtend berührt.

6. Dichtungsanordnung nach einem der Ansprüche 4 oder 5, **dadurch gekennzeichnet, dass** das zweite Maschinenelement (9) durch den Innenring (14) eines Wälzlagers (15) gebildet ist.

7. Dichtungsanordnung nach einem der Ansprüche 1 bis 5, **dadurch gekennzeichnet, dass** das erste Maschinenelement (4) durch eine abzudichtende Welle (12) oder einen Laufring (13) gebildet ist, der die Welle (12) drehfest umschließt.

8. Dichtungsanordnung nach einem der Ansprüche 1 bis 7, **dadurch gekennzeichnet, dass** die erste (2) und/oder die zweite Dichtlippe (3) und/oder die zusätzliche Dichtlippe (10) jeweils aus einem gummielastischen Werkstoff bestehen.

9. Dichtungsanordnung nach Anspruch 8, **dadurch gekennzeichnet, dass** die erste (2) und die zweite Dichtlippe (3) einstückig ineinander übergehend und materialeinheitlich ausgebildet sind.

10. Dichtungsanordnung nach einem der Ansprüche 1 bis 9, **dadurch gekennzeichnet, dass** der Radialwellendichtring (1) und/oder das zusätzliche Dichtelement (7) jeweils einen Stützkörper (16, 17) aus einem zähharten Werkstoff aufweisen.

11. Dichtungsanordnung nach Anspruch 10, **dadurch gekennzeichnet, dass** die Stützkörper (16, 17) jeweils L-förmig ausgebildet sind und jeweils einen Axialvorsprung (18, 19) und jeweils einen Radialvorsprung (20, 21) aufweisen.

12. Dichtungsanordnung nach Anspruch 11, **dadurch gekennzeichnet, dass** der Axialvorsprung (19) des zusätzlichen Dichtelements (7) vom Axialvorsprung (18) des Radialwellendichtrings (1) aussenumfangsseitig dichtend umschlossen ist und dass das axial freie Ende (22) des Axialvorsprungs (19) des zusätzlichen Dichtelements (7) den Radialvorsprung (20) des Radialwellendichtrings (1) anliegend berührt.

13. Dichtungsanordnung nach einem der Ansprüche 11 oder 12, **dadurch gekennzeichnet, dass** der Axialvorsprung (18) des Radialwellendichtrings (1) radial aussenumfangsseitig von einer statischen Dichtung (23) aus gummielastischem Werkstoff umschlossen ist.

14. Dichtungsanordnung nach Anspruch 13, **dadurch gekennzeichnet, dass** der Axialvorsprung (18) des Radialwellendichtrings (1) vom gummielastischen Werkstoff der statischen Dichtung (23) vollständig ummantelt ist.

15. Verwendung einer Dichtungsanordnung nach einem der Ansprüche 1 bis 14 in einer Wasch- oder Spülmaschine.

## Claims

1. Sealing arrangement, comprising a radial shaft sealing ring (1) with at least a first sealing lip (2) and a second dynamically loaded sealing lip (3), which are assigned adjacently to each other at an axial distance and, together with a first machine element (4) to be sealed, which they enclose around the outer circumference in a sealing manner, delimit a lubricant reservoir (6) that is at least partially filled with a lubricant (5), **characterized in that** at least the first sealing lip (2) is assigned an additional sealing element (7), with a groove-shaped, radially inwardly open lubricant chamber (8), which extends over the first sealing lip (2) around the outer circumference at a radial distance in a shielding manner.

2. Sealing arrangement according to Claim 1, **characterized in that** the lubricant (5) leaving the lubricant reservoir (6) during the assembly and subsequent use as intended of the radial shaft sealing ring (1) is at least partially accepted in the lubricant chamber (8).

3. Sealing arrangement according to either of Claims 1 and 2, **characterized in that** the lubricant (5) is formed by a lubricating grease.

4. Sealing arrangement according to Claim 1, **characterized in that** the first sealing lip (2) is arranged adjacent to a second machine element (9) at an axial distance.

5. Sealing arrangement according to Claim 4, **characterized in that** the additional sealing element (7) has an additional sealing lip (10), which in the axial direction (11) is arranged between the first sealing lip (2) and the second machine element (9) and comes into contact with the second machine element (9) in a sealing manner.

6. Sealing arrangement according to either of Claims 4 and 5, **characterized in that** the second machine element (9) is formed by the inner race (14) of an antifriction bearing (15).

7. Sealing arrangement according to one of Claims 1 to 5, **characterized in that** the first machine element (4) is formed by a shaft (12) to be sealed or by a race (13), which encloses the shaft (12) for rotation therewith.

8. Sealing arrangement according to one of Claims 1 to 7, **characterized in that** the first sealing lip (2) and/or the second sealing lip (3) and/or the additional sealing lip (10) respectively consist of a rubber-elastic material.

9. Sealing arrangement according to Claim 8, **characterized in that** the first sealing lip (2) and the second sealing lip (3) are formed such that they merge together in one piece and are of one and the same material.

10. Sealing arrangement according to one of Claims 1 to 9, **characterized in that** the radial shaft sealing ring (1) and/or the additional sealing element (7) respectively have a supporting body (16, 17) of a hard and tough material.

11. Sealing arrangement according to Claim 10, **characterized in that** the supporting bodies (16, 17) are respectively of an L-shaped form and respectively have an axial projection (18, 19) and respectively have a radial projection (20, 21).

12. Sealing arrangement according to Claim 11, **characterized in that** the axial projection (19) of the additional sealing element (7) is enclosed around the outer circumference in a sealing manner by the axial projection (18) of the radial shaft sealing ring (1) and **in that** the axially free end (22) of the axial projection (19) of the additional sealing element (7) comes into contact with the radial projection (20) of the radial shaft sealing ring (1) in an abutting manner.

13. Sealing arrangement according to either of Claims 11 and 12, **characterized in that** the axial projection (18) of the radial shaft sealing ring (1) is enclosed around the radially outer circumference by a static seal (23) of rubber-elastic material.

14. Sealing arrangement according to Claim 13, **characterized in that** the axial projection (18) of the radial shaft sealing ring (1) is completely encapsulated by the rubber-elastic material of the static seal (23).

15. Use of a sealing arrangement according to one of Claims 1 to 14 in a washing machine or dishwasher.

## Revendications

1. Agencement d'étanchéité, comprenant une bague d'étanchéité radiale pour arbre (1) comprenant au moins une première lèvre d'étanchéité (2) et une deuxième lèvre d'étanchéité (3) sollicitée dynamiquement, qui sont associées l'une à l'autre à distance axiale de manière adjacente l'une de l'autre et qui délimitent ensemble, avec un premier élément de machine à étanchéifier (4), qu'elles entourent de manière hermétique du côté de la périphérie extérieure, un réservoir de lubrifiant (6) rempli au moins en partie de lubrifiant (5), **caractérisé en ce qu'**au moins la première lèvre d'étanchéité (2) est associée à un élément d'étanchéité supplémentaire (7) avec une chambre de lubrifiant (8) ouverte radialement vers l'intérieur, réalisée sous forme de rainure, qui surmonte en parapluie, à distance radiale, la première lèvre d'étanchéité (2) du côté de la périphérie extérieure.

2. Agencement d'étanchéité selon la revendication 1, **caractérisé en ce que** pendant le montage et l'utilisation conforme subséquente de la bague d'étanchéité radiale pour arbre (1), du lubrifiant (5) provenant du réservoir de lubrifiant (6) est au moins en partie reçu dans la chambre de lubrifiant (8).

3. Agencement d'étanchéité selon l'une quelconque des revendications 1 ou 2, **caractérisé en ce que** le lubrifiant (5) est formé par une graisse lubrifiante.

4. Agencement d'étanchéité selon la revendication 1, **caractérisé en ce que** la première lèvre d'étanchéité (2) est disposée à distance axiale de manière adjacente à un deuxième élément de machine (9).

5. Agencement d'étanchéité selon la revendication 4, **caractérisé en ce que** l'élément d'étanchéité supplémentaire (7) présente une lèvre d'étanchéité supplémentaire (10) qui est disposée dans la direction axiale (11) entre la première lèvre d'étanchéité (2) et le deuxième élément de machine (9) et qui vient en contact hermétique avec le deuxième élément de machine (9).

6. Agencement d'étanchéité selon l'une quelconque des revendications 4 ou 5, **caractérisé en ce que** le deuxième élément de machine (9) est formé par la bague interne (14) d'un palier à roulement (15).

7. Agencement d'étanchéité selon l'une quelconque des revendications 1 à 5, **caractérisé en ce que** le premier élément de machine (4) est formé par un arbre à étanchéifier (12) ou par une bague de roulement (13) qui entoure l'arbre (12) de manière solidaire en rotation.

8. Agencement d'étanchéité selon l'une quelconque des revendications 1 à 7, **caractérisé en ce que** la première (2) et/ou la deuxième (3) lèvre d'étanchéité et/ou la lèvre d'étanchéité supplémentaire (10) se composent chacune d'un matériau ayant l'élasticité du caoutchouc.

9. Agencement d'étanchéité selon la revendication 8, **caractérisé en ce que** la première (2) et la deuxième (3) lèvre d'étanchéité sont réalisées d'une seule pièce et venues de matière en se prolongeant l'une dans l'autre.

10. Agencement d'étanchéité selon l'une quelconque des revendications 1 à 9, **caractérisé en ce que** la bague d'étanchéité radiale pour arbre (1) et/ou l'élément d'étanchéité supplémentaire (7) présentent chacun un corps de support (16, 17) constitué d'un matériau rigide.

11. Agencement d'étanchéité selon la revendication 10, **caractérisé en ce que** les corps de support (16, 17) sont chaque fois réalisés en forme de L et présentent à chaque fois une saillie axiale (18, 19) et à chaque fois une saillie radiale (20, 21).

12. Agencement d'étanchéité selon la revendication 11, **caractérisé en ce que** la saillie axiale (19) de l'élément d'étanchéité supplémentaire (7) est entourée de manière hermétique du côté de la périphérie extérieure par la saillie axiale (18) de la bague d'étanchéité radiale pour arbre (1) et **en ce que** l'extrémité libre axiale (22) de la saillie axiale (19) de l'élément d'étanchéité supplémentaire (7) vient en contact d'application avec la saillie radiale (20) de la bague d'étanchéité radiale pour arbre (1).

13. Agencement d'étanchéité selon l'une quelconque des revendications 11 ou 12, **caractérisé en ce que** la saillie axiale (18) de la bague d'étanchéité radiale pour arbre (1) est entourée radialement du côté de la périphérie extérieure par un joint d'étanchéité statique (23) constitué d'un matériau ayant l'élasticité du caoutchouc.

14. Agencement d'étanchéité selon la revendication 13, **caractérisé en ce que** la saillie axiale (18) de la bague d'étanchéité radiale pour arbre (1) est complètement enveloppée par le matériau ayant l'élasticité du caoutchouc du joint d'étanchéité statique (23).

15. Utilisation d'un agencement d'étanchéité selon l'une quelconque des revendications 1 à 14 dans une machine à laver ou un lave-vaisselle.
